# EUROPÄISCHE PATENTSCHRIFT

(11) **EP 1 371 193 B1**
(45) Veröffentlichungstag und Bekanntmachung des Hinweises auf die Patenterteilung: **27.04.2011**
(21) Anmeldenummer: 02727203.8
(22) Anmeldetag: 11.03.2002
(51) Int. Cl.: H04L 12/56, H04L 12/64

(54) **ELECTRONICAL SWITCH AND METHOD FOR A COMMUNICATION INTERFACE WITH CUT THROUGH BUFFER MEMORY**
ELEKTRONISCHER SCHALTKREIS UND VERFAHREN FUR EINE KOMMUNIKATIONSSCHNITTSTELLE MIT CUT-THROUGH PUFFERSPEICHER
CIRCUIT ELECTRONIQUE ET PROCEDE POUR INTERFACE DE COMMUNICATION A MEMOIRE TAMPON PSEUDO-TRANSIT

(30) Priorität: 22.03.2001 DE 10114391; 23.08.2001 DE 10141424
(43) Veröffentlichungstag der Anmeldung: 17.12.2003
(73) Patentinhaber: SIEMENS AKTIENGESELLSCHAFT, 80333 München (DE)
(72) Erfinder: GÖTZ, Franz-Josef, 91180 Heideck (DE)
(86) Internationale Anmeldenummer: PCT/DE2002/000854
(87) Internationale Veröffentlichungsnummer: WO 2002/078252

(56) Entgegenhaltungen:
- EP-A- 0 698 886
- WO-A-02/075465
- US-A1- 2002 131 451

## Beschreibung

Die Erfindung betrifft einen elektronischen Schaltkreis und ein Verfahren für eine Kommunikationsschnittstelle mit cut-through Pufferspeicher.

Aus dem Stand der Technik sind geschaltete Kommunikationsnetzwerke bekannt, die nach dem store-and-forward Verfahren oder nach dem cut-through Verfahren arbeiten. Bei dem store-and-forward Verfahren wird ein Datenpaket von einem Netzwerkknoten vollständig empfangen und in einem Speicher des Knotens abgespeichert, bevor das Datenpaket an einen Ziel-Port weitergeleitet wird.

Bei dem cut-through Verfahren muss ein Datenpaket dagegen nicht erst vollständig in dem Speicher des Knotens abgelegt werden, bevor es weitergeleitet werden kann. Im Gegensatz zu dem store-and-forward Verfahren werden bei cut-through die empfangenen Daten unmittelbar an einen Ziel-Port weitergeleitet.

Aus US-A-5 485 578 und EP-A-0698 886 ist ein Kommunikationsnetzwerk mit Knoten bekannt, das nach einem cut-through Verfahren arbeitet und einen cut-through Pufferspeicher aufweist.

Aus dem Stand der Technik sind ferner verschiedene Verfahren und Systeme zur Herstellung von Kommunikationsverbindungen zwischen den Teilnehmern eines Datennetzes bekannt. Weit verbreitet sind Bussysteme, bei denen jeder Teilnehmer jeden anderen Teilnehmer des Datennetzes direkt über das Bussystem adressieren kann. Ferner sind schaltbare Datennetze bekannt, bei denen so genannte Punkt-zu-Punkt-Verbindungen hergestellt werden, das heißt, ein Teilnehmer kann alle anderen Teilnehmer des schaltbaren Datennetzes nur indirekt, durch entsprechende Weiterleitung der zu übertragenden Daten mittels einer oder mehrerer Koppeleinheiten erreichen.

Datennetze ermöglichen die Kommunikation zwischen mehreren Teilnehmern durch die Vernetzung, also Verbindung der einzelnen Teilnehmer untereinander. Kommunikation bedeutet dabei die Übertragung von Daten zwischen den Teilnehmern. Die zu übertragenden Daten werden dabei als Datentelegramme verschickt, d.h. die Daten werden zu mehreren Paketen zusammengepackt und in dieser Form über das Datennetz an den entsprechenden Empfänger gesendet. Man spricht deshalb auch von Datenpaketen. Der Begriff Übertragung von Daten wird dabei im weiteren synonym zur oben erwähnten Übertragung von Datentelegrammen oder Datenpaketen verwendet.

Die Vernetzung selbst wird beispielsweise bei schaltbaren Hochleistungsdatennetzen, insbesondere Ethernet, dadurch gelöst, dass zwischen zwei Teilnehmern jeweils mindestens eine Koppeleinheit geschaltet ist, die mit beiden Teilnehmern verbunden ist. Jede Koppeleinheit kann mit mehr als zwei Teilnehmern verbunden sein. Jeder Teilnehmer ist mit mindestens einer Koppeleinheit, aber nicht direkt mit einem anderen Teilnehmer verbunden. Teilnehmer sind beispielsweise Computer, speicherprogrammierbare Steuerungen (SPS) oder andere Maschinen, die elektronische Daten mit anderen Maschinen austauschen, insbesondere verarbeiten.

In verteilten Automatisierungssystemen, beispielsweise im Bereich Antriebstechnik, müssen bestimmte Daten zu bestimmten Zeiten bei den dafür bestimmten Teilnehmern eintreffen und von den Empfängern verarbeitet werden. Man spricht dabei von echtzeitkritischen Daten bzw. Datenverkehr, da ein nicht rechtzeitiges Eintreffen der Daten am Bestimmungsort zu unerwünschten Resultaten beim Teilnehmer führt. Gemäss IEC 61491, EN61491 SERCOS interface - Technische Kurzbeschreibung (http://www.sercos.de/deutsch/index_deutsch.htm) kann ein erfolgreicher echtzeitkritischer Datenverkehr der genannten Art in verteilten Automatisierungssystemen gewährleistet werden.

Ebenso ist an sich aus dem Stand der Technik bekannt in einem solchen Automatisierungssystem ein synchrones, getaktetes Kommunikationssystem mit Äquidistanz-Eigenschaften zu verwenden. Hierunter versteht man ein System aus wenigstens zwei Teilnehmern, die über ein Datennetz zum Zweck des gegenseitigen Austausches von Daten bzw. der gegenseitigen Übertragung von Daten miteinander verbunden sind.

Dabei erfolgt der Datenaustausch zyklisch in äquidistanten Kommunikationszyklen, die durch den vom System verwendeten Kommunikationstakt vorgegeben werden. Teilnehmer sind beispielsweise zentrale Automatisierungsgeräte, Programmier-, Projektierungs- oder Bediengeräte, Peripheriegeräte wie z.B. Ein-/ Ausgabe-Baugruppen, Antriebe, Aktoren, Sensoren, speicherprogrammierbare Steuerungen (SPS) oder andere Kontrolleinheiten, Computer oder Maschinen, die elektronische Daten mit anderen Maschinen austauschen, insbesondere Daten von anderen Maschinen verarbeiten. Unter Kontrolleinheiten werden im folgenden Regler- oder Steuerungseinheiten jeglicher Art verstanden. Als Datennetze werden beispielsweise Bussysteme wie z.B. Feldbus, Profibus, Ethernet, Industrial Ethernet, FireWire oder auch PC-interne Bussysteme (PCI), etc. verwendet.

Automatisierungskomponenten (z.B. Steuerungen, Antriebe,...) verfügen heute im allgemeinen über eine Schnittstelle zu einem zyklisch getakteten Kommunikationssystem. Eine Ablaufebene der Automatisierungskomponente (Fast-cycle) (z.B. Lageregelung in einer Steuerung, Drehmomentregelung eines Antriebs) ist auf den Kommunikationszyklus synchronisiert. Dadurch wird der Kommunikationstakt festgelegt. Andere, niederperformante Algorithmen (Slow-cycle) (z.B. Temperaturregelungen) der Automatisierungskomponente können ebenfalls nur über diesen Kommunikationstakt mit anderen Komponenten (z.B. Binärschalter für Lüfter, Pumpen,...) kommunizieren, obwohl ein langsamerer Zyklus ausreichend wäre. Durch Verwendung nur eines Kommunikationstaktes zur Übertragung von allen Informationen im System entstehen hohe Anforderungen an die Bandbreite der Übertragungsstrecke.

Aus dem Stand der Technik bekannte Systemkomponenten nutzen zur Kommunikation für jede Prozess- bzw. Automatisierungsebene nur ein Kommunikationssystem bzw. einen Kommunikationszyklus (Fast-cycle) in dessen Takt alle relevanten Informationen übertragen werden. Daten, die nur im Slow-cycle benötigt werden, können z.B. über zusätzliche Protokolle gestaffelt übertragen werden, um die Anforderungen an die Bandbreite zu begrenzen. Das bedeutet zusätzlichen Softwareaufwand in den Automatisierungskomponenten. Weiterhin wird sowohl die Busbandbreite als auch der minimal mögliche Kommunikationszyklus im gesamten System durch die niederperformanteste Komponente bestimmt.

Der Erfindung liegt die Aufgabe zu Grunde, ein verbessertes Verfahren und einen verbesserten elektronischen Schaltkreis für eine Kömmunikationsschnittstelle sowie ein entsprechendes Computerprogrammprodukt zu schaffen.

Die der Erfindung zu Grunde liegende Aufgabe wird mit den Merkmalen der unabhängigen Patentansprüche jeweils gelöst.

Die Erfindung erlaubt es eine Kommunikationsschnittstelle zwischen verschieden performanten, zyklisch getakteten Kommunikationsverbindungen zu realisieren. Dadurch ermöglicht es die Erfindung, beispielsweise in einem Automatisierungssystem verschieden performante Kommunikationsverbindungen zu betreiben, deren Charakteristik der jeweiligen Applikation angepasst ist. Beispielsweise kann mittels der Erfindung für langsame Ein- / Ausgabebaugruppen eine niederperformante Kommunikationsschnittstelle zur Verfügung gestellt werden, so dass die Baugruppen über eine entsprechende Schnittstelle mit der zugeordneten Ablaufebene in der Steuerung kommunizieren können.

Ein besonderer Vorteil der Erfindung ist darin zu sehen, dass sie das Zusammenführen von Datentelegrammen unterschiedlicher Kommunikationsverbindungen gleicher Übertragungsraten und synchroner Kommunikationszyklen auf der Ebene eines Koppelknotens erlaubt, ohne dass hierfür ein Anwendungsprogramm auf einer höheren logischen Schicht benötigt wird. Dies ist insbesondere für eine Kommunikationsanschaltung, einen so genannten Switch-ASIC, vorteilhaft, wobei diese Kommunikationsanschaltung mehrere separate Ports für verschiedene Kommunikationsverbindungen beinhalten kann.

Ein weiterer besonderer Vorteil der Erfindung liegt darin, dass ein konsistenter Austausch von Echtzeitdaten in einem deterministischen Kommunikationssystem unterschiedlicher Teilnetzwerke, die jeweils gleiche Übertragungsraten und synchrone Kommunikationszyklen aufweisen, ermöglicht wird. Für die konsistente Übertragung von Echtzeitdaten ist entscheidend, dass diese jeweils einem bestimmten Übertragungszyklus zugeordnet sind, und zwar auch über die Kommunikationsschnittstelle zwischen den einzelnen Teil-Netzwerken hinweg. Eine solche feste Zuordnung von Echtzeitdaten zu bestimmten Übertragungszyklen über die Grenzen der Teil-Netzwerke hinweg wird durch die Erfindung ermöglicht.

Erfindungsgemäß erfolgt der konsistente Datenaustausch über einen cut-through Pufferspeicher, das heißt, von dem Empfangsport werden die Daten unmittelbar an den betreffenden Sendeport weitergeleitet.

Die Erfindung ist besonders vorteilhaft, da sich sowohl eine Kommunikationsschnittstelle zwischen einer höherperformanten zu einer niederperformanten Kommunikationsverbindung als auch von einer niederperformanten zu einer höherperformanten Kommunikationsverbindung herstellen lässt. Unter einer höherperformanten Kommunikationsverbindung wird dabei eine Kommunikationsverbindung verstanden, über die in jedem Übertragungszyklus Daten übertragen werden. Entsprechend versteht man unter einer niederperformanten Kommunikationsverbindung eine Kommunikationsverbindung, über die nicht in jedem Übertragungszyklus Daten übertragen werden.

Wenn ein Datentelegramm von einer höherperformanten Kommunikationsverbindung empfangen wird, so wird dieses Datentelegramm an die niederperformante Kommunikationsverbindung weitergeleitet, wenn im Wesentlichen gleichzeitig mit dem Empfang des Datentelegramms ein Übertragungszyklus der niederperformanten Kommunikationsverbindung beginnt.

Typischerweise wird dasselbe Datentelegramm auf der höherperformanten Kommunikationsverbindung z.B. zur Übertragung der Abtastwerte eines Sensors in kurzen Zeitabständen wiederholt übertragen, wobei sich die Nutzinformation der einzelnen Datentelegramme bei einer relativ hochfrequenten Abtastung nur wenig unterscheiden. Wenn ein nachfolgendes Datentelegramm empfangen wird, befindet sich die niederperformante Kommunikationsverbindung noch im vorherigen Übertragungszyklus, so dass dieses nachfolgende Datentelegramm von der Kommunikationsschnittstelle ignoriert wird.

Dies wird solange fortgesetzt, bis wieder ein Datentelegramm auf der höherperformanten Kommunikationsverbindung empfangen wird, und dieser Empfang im Wesentlichen gleichzeitig mit dem Beginn des nächsten Übertragungszyklus auf der niederperformanten Kommunikationsverbindung zusammentrifft. Auf diese Art und Weise erfolgt in der Kommunikationsschnittstelle eine Unterabtastung.

Wird andererseits ein Datentelegramm über die niederperformante Kommunikationsverbindung empfangen, so wird auch dieses Datentelegramm unmittelbar an die höherperformante Kommunikationsverbindung weitergeleitet, wenn im Wesentlichen gleichzeitig mit dem Empfang des Datentelegramms von der niederperformanten Kommunikationsverbindung ein Übertragungszyklus der höherperformanten Kommunikationsverbindung beginnt. In nachfolgenden Übertragungszyklen der höherperformanten Kommunikationsverbindung kann es die entsprechende Sendeliste erfordern, dass entsprechende weitere Datentelegramme über die höherperformante Kommunikationsverbindung versendet werden, weil beispielsweise empfängerseitig ein Gerät angeordnet ist, das die entsprechenden Datentelegramme mit der durch den Übertragungszyklus der höherperformanten Kommunikationsverbindung gegebenen Taktrate erwartet.

In diesem Fall kann das nur einmal empfangene Datentelegramm von der Kommunikationsschnittstelle in den, während des Übertragungszyklus der niederperformanten Kommunikationsverbindung aufeinander folgenden Übertragungszyklen der höherperformanten Kommunikationsverbindung wiederholt ausgesendet werden, oder es kann statt einer wiederholten Aussendung des nur einmal empfangenen Datentelegramms ein als ungültig gekennzeichnetes Ersatzdatentelegramm gesendet werden. Alternativ kann auch ein Sprung in der Sendeliste sowie ein Sprung in der Empfangsliste der entsprechenden Ports durchgeführt werden.

Auf diese Art und Weise ist auch eine Skalierbarkeit der Kommunikationsschnittstelle gegeben, das heißt, es kann je nach Bedarf eine Über- oder eine Unterabtastung erfolgen, um unterschiedliche Kommunikationsverbindungen miteinander zu koppeln. Von ganz besonderem Vorteil ist dabei, dass eine solche Kopplung auch für Echtzeitdaten möglich ist.

Von besonderem Vorteil ist dabei ferner, dass auf einem Koppelknoten nur eine Standardkommunikationsschnittstelle implementiert werden muss und dass keine zusätzliche Instanz zum Umkopieren der Daten zwischen den verschiedenen Kommunikationsschnittstellen notwendig ist.

Ein weiterer Vorteil der Erfindung ist, dass sich ein Automatisierungssystem realisieren lässt, welches verschieden performante Teil-Netze beinhaltet, insbesondere zur Anwendung bei und in Verpackungsmaschinen, Pressen, Kunststoffspritzmaschinen, Textilmaschinen, Druckmaschinen, Werkzeugmaschinen, Robotor, Handlingssystemen, Holzverarbeitungsmaschinen, Glasverarbeitungsmaschinen, Keramikverarbeitungsmaschinen sowie Hebezeugen.

Im Weiteren wird ein bevorzugtes Ausführungsbeispiel der Erfindung mit Bezugnahme auf die Zeichnungen näher erläutert. Es zeigen:
- Fig. 1: ein Blockdiagramm einer Ausführungsform eines er- findungsgemäßen elektronischen Schaltkreises und entsprechende Kommunikationsverbindungen zwischen zwei Teilnehmern verschieden performanter Netze,
- Fig. 2: ein Flussdiagramm einer bevorzugten Ausführungsform des erfindungsgemäßen Verfahrens für den Empfang und die Weiterleitung eines Datentelegramms,
- Fig. 3: ein Flussdiagramm der bevorzugten Ausführungsform hinsichtlich des Sendens eines Datentelegramms von einem niederperformanten zu einem höherperformanten Netz,
- Fig. 4: eine bevorzugte Ausführungsform eines erfindungsge- mäßen Automatisierungssystems und
- Fig. 5: ein Ausführungsbeispiel eines Automatisierungssys- tems mit unterschiedlich performanten Teil-Netzen.

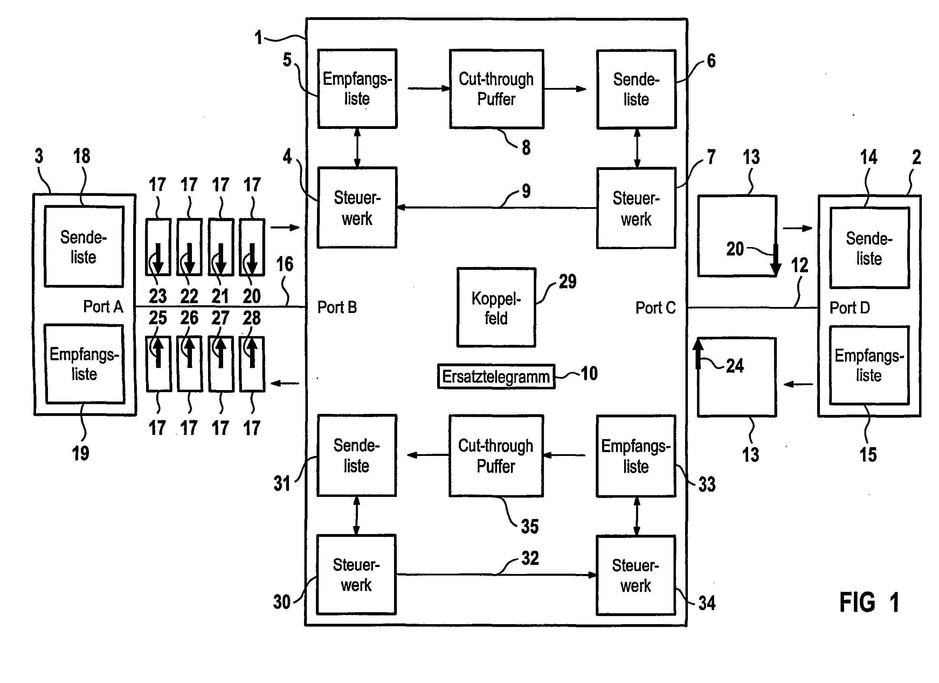

Die Fig. 1 zeigt einen elektronischen Schaltkreis 1, der als Koppelknoten zwischen den Knoten 2 und 3 dient.
Der Koppelknoten 1 hat die beiden Kommunikationsports Port B und Port C.

Dem Port B ist eine Empfangsliste 5 zugeordnet. Die Empfangsliste 5 bestimmt die Datentelegramme, die von verschiedenen, weiteren Knoten des Kommunikationssystems zu verschiedenen Zeitpunkten vom Port B empfangen werden sollen. Die Art, der Zeitpunkt und der Adressat der Datentelegramme sind also im Voraus bestimmt; es ändern sich lediglich die mit den Datentelegrammen jeweils transportierten Nutzdaten.

Der Port C hat eine zugeordnete Sendeliste 6, die in dem deterministischen Kommunikationssystem bestimmt, zu welchen Zeitpunkten welche Datentelegramme an welche Empfänger vom Koppelknoten 1 von dessen Port C aus zu senden sind.

Ferner hat der Koppelknoten 1 einen cut-through Puffer 8 für den Empfang und die Weiterleitung eines Datentelegramms. Der cut-through Puffer 8 dient also als Empfangspuffer; ein Sendepuffer ist bei Anwendung eines cut-through Verfahrens nicht erforderlich. Der Koppelknoten 1 hat ferner ein Steuerwerk 4 für die Empfangsliste 5 und ein Steuerwerk 7 für die Sendeliste 6.

Bei Beginn eines Übertragungszyklus 17 arbeitet das Steuerwerk 4 die Empfangsliste 5 ab und das Steuerwerk 7 arbeitet bei Beginn eines Übertragungszyklus 13 die Sendeliste 6 ab. Sobald ein Übertragungszyklus 13 beginnt, wird von dem Steuerwerk 7 an das Steuerwerk 4 ein Signal 9 abgegeben. Dies signalisiert dem Steuerwerk 4, dass ein im Wesentlichen gleichzeitig empfangenes Datentelegramm in dem gerade beginnenden Übertragungszyklus 13 unmittelbar über den cut-through Puffer 8 über den Port C an den Empfänger, das heißt, beispielsweise den Knoten 2, weitergeleitet werden kann.

Der Koppelknoten 1 ist mit dem Knoten 2 über eine Kommunikationsverbindung 12 verbunden. Bei der Kommunikationsverbindung 12 handelt es sich um eine niederperformante Verbindung mit einem Übertragungszyklus 13, der auch als Rahmen oder "Frame" eines Kommunikationszyklus bezeichnet wird.

Die Kommunikationsverbindung 12 verbindet den Port C mit einem Port D des Knotens 2. Dem Port D sind eine Sendeliste 14 und eine Empfangsliste 15 zugeordnet, die wiederum die deterministische Übertragung von Datentelegrammen über das Kommunikationssystem, das heißt, über die Kommunikationsverbindung 12 spezifizieren.

Entsprechend ist der Port B des Koppelknotens 1 mit einem Port A des Knotens 3 über eine Kommunikationsverbindung 16 verbunden, wobei es sich bei der Kommunikationsverbindung 16 um eine höherperformante Verbindung mit einem Übertragungszyklus 17 handelt.

In dem Port A des Knotens 3 sind wiederum eine Sendeliste 18 und eine Empfangsliste 19 für die deterministische Übertragung von Datentelegrammen vom bzw. zum Knoten 3 vorhanden.

Die Kommunikation über die Kommunikationsverbindungen 12 und 16 läuft in den sich zyklisch wiederholenden Übertragungszyklen 13 bzw. 17 ab, die ihrerseits in Zeitschlitze unterteilt sein können. Während eines Übertragungszyklus 13 bzw. 17 werden die entsprechenden Empfangs- und Sendelisten abgearbeitet, wobei verschiedene Datentelegramme den betreffenden Zeitschlitzen in einem Übertragungszyklus zugeordnet werden.

Im betrachteten Beispiel der Fig. 1 sind vier zeitlich aufeinanderfolgende Übertragungszyklen 17 gezeigt, in denen jeweils ein oder mehrere Datentelegramme übertragen werden. Der Übersichtlichkeit halber ist in der Fig. 1 für jeden Übertragungszyklus 17 nur ein Datentelegramm 20, 21, 22 bzw. 23 gezeigt.

Aufgrund des in dem Koppelknoten 1 zur Anwendung kommenden cut-through Verfahrens müssen die Kommunikationsverbindungen 12 und 16 miteinander synchronisiert sein, das heißt, der Beginn des Übertragungszyklus 13 und des ersten Übertragungszyklus 17 darf keine Phasenverschiebung aufweisen. Ebenso kann die Länge der Übertragungszyklen 13 und 17 nicht beliebig gewählt werden, sondern die Längen müssen entweder gleich sein oder ein ganzzahliges Vielfaches voneinander betragen.

In einem zweiten Anwendungsfall wird von dem Knoten 2 gemäß dessen Sendeliste 14 ein Datentelegramm 24 im Übertragungszyklus 13 über die Kommunikationsverbindung 12 von dessen Port D an den Port C des Koppelknotens 1 gesendet. Das Datentelegramm 24 wird von dem Port C des Koppelknotens 1 gemäß dessen Empfangsliste 33 empfangen und über den cut-through Puffer 35 an den Port B zur Sendung weitergeleitet, wenn das Steuerwerk 34 der Empfangsliste 33 von dem Steuerwerk 30 der Sendeliste 31 ein entsprechendes Signal 32 im Wesentlichen gleichzeitig mit dem Empfang des Datentelegramms 24 empfängt.

Der Koppelknoten 1 sendet dann gemäß dessen Sendeliste 31 vom Port B in den nächsten Übertragungszyklen 17 die Datentelegramme 25, 26, 27 bzw. 28. Dies kann deshalb so erfolgen, da es sich bei den Datentelegramme 25 bis 28 jeweils um eine Kopie des Datentelegramms 24 handelt. Auf diese Art und Weise werden die Belange der Empfangsliste 19 des Knotens 3 erfüllt, die in jedem Datenschlitz des Übertragungszyklus 17 ein Datentelegramm erwartet.

Eine alternative Möglichkeit ist die Speicherung eines Ersatztelegramms im Speicher 10, welches keine Nutzinformationen trägt. In diesem Fall ist nur eines der Datentelegramme 25 bis 28 eine Kopie des Datentelegramms 24, beispielsweise das Datentelegramm 25, während die weiteren Datentelegramme 26 bis 28 jeweils Kopien des Ersatztelegramms des Speichers 10 sind. Dieser Vorgang kann beispielsweise unter der Kontrolle des Steuerwerks 30 erfolgen.

Insgesamt ist es also so, dass bei einer n-fachen Sendung eines Datentelegramms von dem Knoten 3, beispielsweise einer vierfachen Sendung, dieses Datentelegramm von dem Knoten 1 an den Knoten 2 m-fach gesendet wird, wobei m < n ist, vorzugsweise m =1 wie in dem betrachteten Beispiel.

Andererseits wird bei einer n-fachen Sendung eines Datentelegramms über die niederperformante Kommunikationsverbindung 12 dieses Datentelegramm entweder m-fach wiederholt, das heißt, in dem betrachteten Beispiel erfolgt eine vierfache Wiederholung bei einer einmaligen Sendung, oder das gesendete Datentelegramm wird nur einmal gesendet und es erfolgt eine zusätzliche Sendung von m-1 Ersatztelegrammen.

Der Koppelknoten 1 hat ferner ein Koppelfeld 29, über welches im Koppelknoten 1 Kommunikationsverbindungen zwischen den Ports B und C sowie, falls erforderlich, weitere, in der Fig. 1 nicht gezeigte Ports des Koppelknotens 1 hergestellt werden können.

Der Koppelknoten 1 kann auch selbst integraler Bestandteil einer Automatisierungskomponente sein.

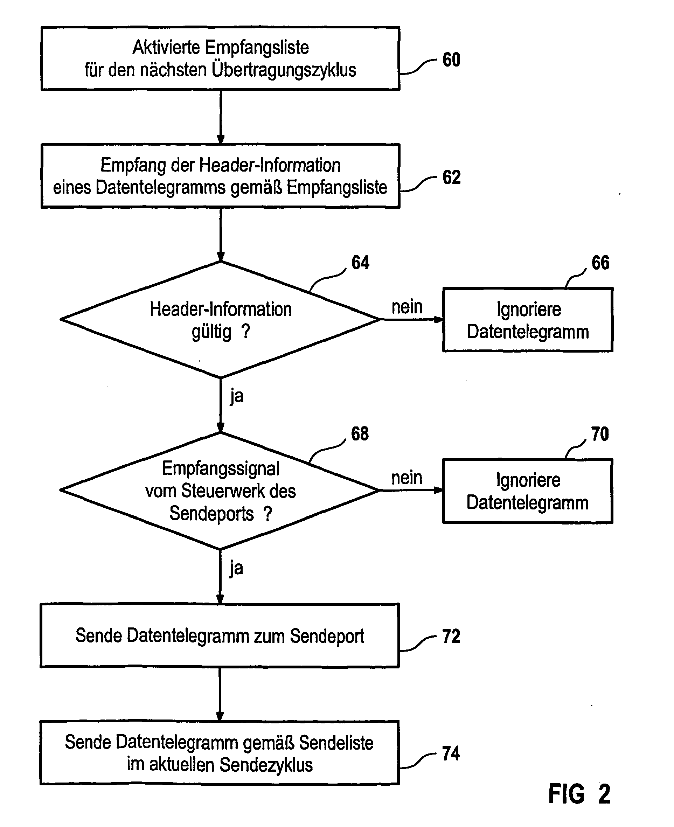

Die Fig. 2 zeigt ein entsprechendes Flussdiagramm hinsichtlich des Empfangs und der Weiterleitung eines Datentelegramms. Im Schritt 60 wird zunächst die Empfangsliste für den nächstfolgenden Übertragungszyklus am Empfangsport aktiviert.

Daraufhin wird ein Datentelegramm im Schritt 62 empfangen, und zwar zunächst die so genannte Header-Information dieses Datentelegramms. Diese Header-Information wird in dem Schritt 64 auf deren Gültigkeit überprüft. Falls das Ergebnis dieser Überprüfung basierend auf der empfangenen Header-Information, beispielsweise die Bildung einer Prüfsumme oder die Anwendung vergleichbarer Methoden, zeigt, dass das Datentelegramm nicht korrekt empfangen wird bzw. wurde, wird dieses Datentelegramm im Schritt 66 ignoriert.

Wenn dagegen die Header-Information gültig ist, wird im Schritt 68 geprüft, ob ein Signal vom Steuerwerk des Sendeports empfangen wird. Der Empfang eines solchen Signals zeigt an, dass ein Übertragungszyklus am Sendeport gerade beginnt. Wenn dies nicht der Fall ist, wird das Datentelegramm im Schritt 70 ignoriert. Wenn das Gegenteil der Fall ist, das heißt, wenn ein Sende- Übertragungszyklus gerade beginnt, wird das Datentelegramm im Schritt 72 aus dem cut-through Pufferspeicher zum Sendeport transferiert und im Schritt 74 von dort gemäß der Sendeliste in dem aktuellen Sende-Übertragungszyklus ausgesendet.

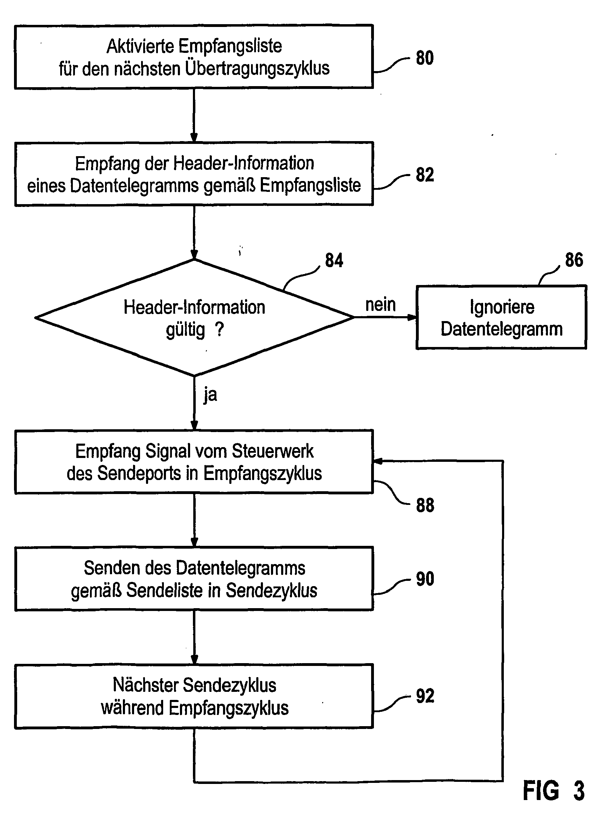

Die Fig. 3 zeigt eine alternative Ausführungsform dieses Verfahrens, insbesondere hinsichtlich des Empfangs eines Datentelegramms von einer niederperformanten Kommunikationsverbindung zur Weiterleitung über eine höherperformante Kommunikationsverbindung.

Im Schritt 80 wird wiederum die Empfangsliste für den nächsten Empfangszyklus des betreffenden Empfangsports aktiviert. Die nachfolgenden Schritte 82, 84 und gegebenenfalls 86 verlaufen analog zu den entsprechenden Schritt 62, 64 und gegebenenfalls 66 des Flussdiagramms der Fig. 2.

Wenn die Prüfung im Schritt 84 ergibt, dass die Header-Information gültig ist, wird das Datentelegramm im Schritt 90 gemäß der Sendeliste des Sendeports im nächsten synchronen Übertragungszyklus versendet, sofern im Schritt 88 zuvor ein entsprechendes Signal vom Steuerwerk des Sendeports während des Empfangszyklus des Empfangsports am Empfangsport empfangen worden ist.

Im Schritt 92 beginnt der nächste Sendezyklus des Sendeports während des noch anhaltenden Empfangszyklus am Empfangsport. Danach wird im Schritt 88 wiederum ein Signal vom Steuerwerk des Sendeports am Empfangsport empfangen, wonach ein neuer Sende-Übertragungszyklus am Sendeport beginnt. Daraufhin wird das Datentelegramm wiederholt im Schritt 90 versendet. Diese Schrittfolge 88, 90 und 92 wird solange wiederholt, das heißt, das Datentelegramm wird solange wiederholt gesendet, wie der Empfangszyklus am Empfangsport andauert.

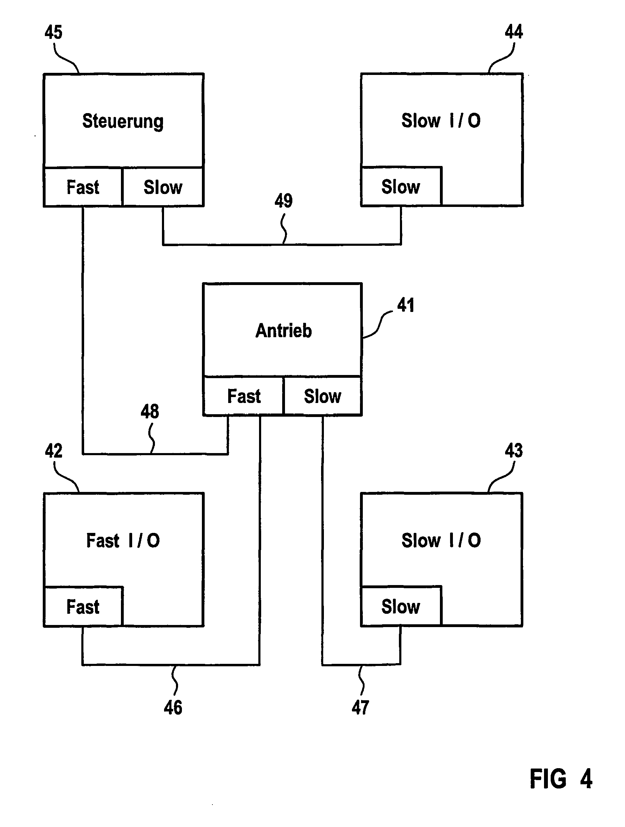

Die Fig. 4 zeigt ein Ausführungsbeispiel eines Automatisierungssystems mit den Knoten 41, 42, 43, 44 und 45. Bei dem Knoten 41 handelt es sich um einen Antrieb, der einen Koppelknoten mit den beiden Ports "Fast" und "Slow" beinhaltet. Der Port "Fast" entspricht dem Port B und der Port "Slow" entspricht dem Port C des Koppelknotens 1 der Fig 1.

Der Port "Fast" des Knotens 41 ist mit dem Port "Fast" des Knotens 42 verbunden, entsprechend dem Port A des Knotens 3 der Fig. 1. Bei der die Ports "Fast" der Knoten 41 und 42 verbindenden Leitung handelt es sich entsprechend um eine höherperformante Kommunikationsverbindung 46 entsprechend der Kommunikationsverbindung 16 der Fig. 1.

Der andere Port "Slow" des Knotens 41 ist über eine niederperformante Kommunikationsverbindung 47 mit einem Port "Slow" des Knotens 43 verbunden, entsprechend der Kommunikationsverbindung 12 bzw. dem Port D der Fig. 1.

Ferner ist ein weiterer Port "Fast" mit einem entsprechenden Port "Fast" des Knotens 45, beispielsweise einer Steuerung, über eine höherperformante Kommunikationsverbindung 48 verbunden. Der Knoten 45 hat einen Port "Slow", der über eine niederperformante Kommunikationsverbindung 49 mit einem entsprechenden Port "Slow" des Knotens 44 verbunden ist. Der Knoten 45 beinhaltet ebenfalls einen Koppelknoten des in der Fig. 1 gezeigten Typs. Der Knoten 44 entspricht in seinem Aufbau wiederum dem Knoten 2 der Fig. 1.

In dem Automatisierungssystem der Fig. 4 ist es also möglich, dass beispielsweise ein Datentelegramm vom Knoten 42 an den Knoten 44 übertragen wird, obwohl die Übertragung über drei Kommunikationsverbindungen jeweils unterschiedlicher Charakteristik erfolgen muss.

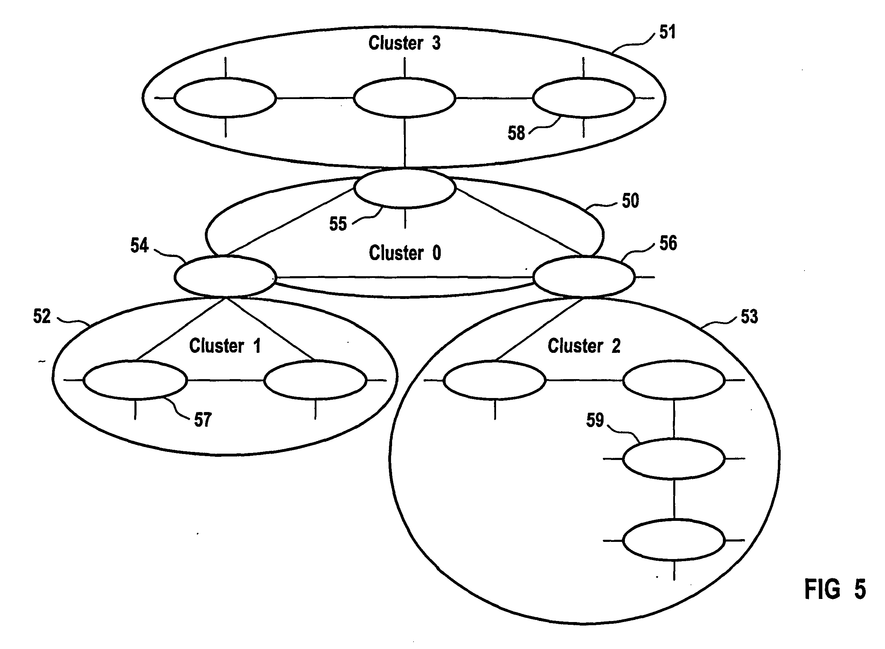

Dies kann auch für die Kopplung verschiedener Teil-Netze verwendet werden, wie mit Bezug auf die Fig. 5 näher erläutert wird:

Das Automatisierungssystem der Fig. 5 weist verschiedene Teil-Netze 50, 51, 52 und 53 auf. Die Teil-Netze 50 bis 53 haben dabei jeweils unterschiedliche Kommunikationssysteme mit synchronen Übertragungszyklen und gleichen Datenraten.

Die entsprechenden Kommunikationssysteme dienen jeweils der Kommunikation der Knoten eines der Teil-Netze untereinander. Es kann jedoch auch eine Kommunikation über die Grenzen der Teil-Netze hinweg erfolgen. Hierzu sind die Knoten 54, 55 und 56 des Teil-Netzes 50 als Koppelknoten ausgebildet und zwar z. B. entsprechend des Koppelknotens 1 der Fig. 1.

So können etwa der Knoten 57 des Teil-Netzes 52 und der Knoten 58 des Teil-Netzes 51 miteinander kommunizieren. Entsprechend kann beispielsweise der Knoten 59 des Teil-Netzes 53 mit dem Knoten 57, dem Knoten 58 oder auch einem der Koppelknoten 54 bis 56 kommunizieren. Dies erlaubt es, verschiedene bereits bestehende Automatisierungssysteme zu einem Gesamtsystem miteinander zu vernetzen, ohne dass die Komponenten der bestehenden Systeme ausgetauscht werden müssen.

Vorzugsweise wird als Kommunikationssystem für die einzelnen Teil-Netze ein industrielles Ethernet, vorzugsweise ein isochrones Realtime Ethernet oder ein Realtime Fast Ethernet mit jeweils unterschiedlichen Übertragungszyklen, das heißt, unterschiedlichen Isochronzyklen, und / oder unterschiedlichen Datenraten verwendet. Die Länge der Übertragungszyklen in den verschiedenen Teil-Netzen kann dabei beispielsweise 500 ms, 10 ms und 1ms betragen.

Zusammengefasst betrifft die Erfindung ein Verfahren und einen elektronischen Schaltkreis für eine Kommunikationsschnittstelle zwischen einer ersten Kommunikationsverbindung mit einem ersten Übertragungszyklus einer ersten Länge und einer zweiten Kommunikationsverbindung mit einem zweiten Übertragungszyklus einer zweiten Länge, wobei der erste und der zweite Übertragungszyklus zueinander synchron sind und die ersten und zweiten Längen gleich sind oder ein ganzzahliges Vielfaches voneinander betragen, mit einer Empfangsliste für den ersten Übertragungszyklus und einer Sendeliste für den zweiten Übertragungszyklus, wobei ein gemäß der Empfangsliste empfangenes Datentelegramm einem Element der Sendeliste zugeordnet ist, und mit einem cut-through Pufferspeicher für ein gemäß der Empfangsliste empfangenes Datentelegramm und gemäß der Sendeliste zu sendendes Datentelegramm.

## Patentansprüche

1. Elektronischer Schaltkreis für eine Kommunikationsschnittstelle zwischen einer ersten Kommunikationsverbindung (16) mit einem ersten Übertragungszyklus (17) einer ersten Länge und einer zweiten Kommunikationsverbindung (12) mit einem zweiten Übertragungszyklus (13) einer zweiten Länge,
**dadurch gekennzeichnet**
**dass** der erste und der zweite Übertragungszyklus zueinander synchron sind und die ersten und zweiten Längen gleich sind oder ein ganzzahliges Vielfaches voneinander betragen, dass eine Empfangsliste (5, 15, 19, 33) für den ersten Übertragungszyklus und eine Sendeliste (6, 14, 18, 31) für den zweiten Übertragungszyklus vorgesehen sind, wobei ein gemäß der Empfangsliste empfangenes Datentelegramm (20, 21, 22, 23, 24, 25, 26, 27, 28) einem Element der Sendeliste zugeordnet ist, und dass ein Pufferspeicher (8, 35) für ein gemäß der Empfangsliste empfangenes Datentelegramm und gemäß der Sendeliste zu sendendes Datentelegramm vorgesehen ist.

2. Elektronischer Schaltkreis nach Anspruch 1 mit Mitteln (4, 7, 9, 30, 32, 34) zur Weiterleitung des Datentelegramms von dem Pufferspeicher, insbesondere einem cut-through Pufferspeicher, zu der zweiten Kommunikationsverbindung.

3. Elektronischer Schaltkreis nach Anspruch 1 oder 2 mit einem ersten Steuerwerk (4, 34) für die Empfangsliste und mit einem zweiten Steuerwerk (7, 30) für die Sendeliste, wobei das zweite Steuerwerk zur Abgabe eines Signals (9, 32) an das erste Steuerwerk ausgebildet ist, wenn der zweite Übertragungszyklus beginnt.

4. Elektronischer Schaltkreis nach Anspruch 1, 2 oder 3 mit Mitteln zur Prüfung einer Header-Information des Datentelegramms und mit Mitteln zur Weiterleitung des Datentelegramms an die zweite Kommunikationsverbindung, sobald die Header-Information verifiziert worden ist.

5. Elektronischer Schaltkreis nach einem der vorhergehenden Ansprüche 1 bis 4, bei dem die erste und / oder die zweite Kommunikationsverbindung bidirektional sind und jeder der bidirektionalen Kommunikationsverbindungen jeweils eine Sendeliste und eine Empfangsliste zugeordnet sind.

6. Elektronischer Schaltkreis nach einem der vorhergehenden Ansprüche 1 bis 5, bei dem es sich bei dem Datentelegramm um Echtzeitdaten handelt.

7. Elektronischer Schaltkreis nach einem der vorhergehenden Ansprüche 1 bis 6, wobei die ersten und zweiten Kommunikationsverbindungen eine Äquidistanz- Eigenschaft aufweisen.

8. Elektronischer Schaltkreis nach einem der vorhergehenden Ansprüche 1 bis 7, wobei es sich bei den ersten und zweiten Kommunikationsverbindungen um ein industrielles Ethernet, insbesondere um ein isochrones Realtime Ethernet oder ein Realtime Fast Ethernet (RTF) handelt.

9. Elektronischer Schaltkreis nach einem der vorhergehenden Ansprüche 1 bis 8 mit mehreren Eingangs- und / oder Ausgangsports, denen jeweils eine Empfangs- und / oder Sendeliste zugeordnet ist und mit einem Koppelfeld (29) zur Koppelung von einem der Ports mit einem oder mehreren der anderen Ports.

10. Automatisierungssystem mit mehreren Komponenten (41, 42, 43, 44, 45), die durch Kommunikationsverbindungen (46, 47, 48 ,49) miteinander verbunden sind, in dem jede der Komponenten einen elektronischen Schaltkreis nach einem der vorhergehenden Ansprüche 1 bis 9 als integralen Bestandteil oder als Zusatzgerät aufweist.

11. Automatisierungssystem mit zumindest einem ersten Teil-Netzwerk (50) mit ersten Kommunikationsverbindungen und mit zumindest einem zweiten Teil-Netzwerk (51, 52, 53) mit zweiten Kommunikationsverbindungen und mit zumindest einem Koppelknoten (54, 55, 56) zwischen den ersten und zweiten Teil-Netzwerken mit einem elektronischen Schaltkreis nach einem der vorhergehenden Ansprüche 1 bis 9.

12. Automatisierungssystem nach Anspruch 10 oder 11 mit mehreren Koppelknoten, die durch ein drittes Teil-Netzwerk (50) miteinander verbunden sind.

13. Automatisierungssystem nach Anspruch 10, 11 oder 12, bei dem die unterschiedlichen Teil-Netzwerke verschiedene Übertragungszyklen und / oder Übertragungsraten aufweisen.

14. Verfahren zur Herstellung einer Kommunikationsschnittstelle zwischen einer ersten Kommunikationsverbindung mit einem ersten Übertragungszyklus einer ersten Länge und einer zweiten Kommunikationsverbindung mit einem zweiten Übertragungszyklus einer zweiten Länge, wobei die ersten und die zweiten Übertragungszyklen zueinander synchron sind und die erste und die zweite Länge gleich sind oder ein ganzzahliges Vielfaches voneinander aufweisen, mit folgenden Schritten:
a. Empfang eines Datentelegramms gemäß einer dem ersten Übertragungszyklus zugeordneten Empfangsliste,
b. Speicherung des Datentelegramms in einem Pufferspeicher,
c. Senden des Datentelegramms gemäß einer dem zweiten Übertragungszyklus zugeordneten Sendeliste.

15. Verfahren nach Anspruch 14, bei dem ein Steuerwerk der Sendeliste ein Signal an das Steuerwerk der Empfangsliste abgibt, wenn der zweite Übertragungszyklus beginnt.

16. Verfahren nach einem der vorhergehenden Ansprüche 14 oder 15, bei dem es sich bei dem Datentelegramm um Echtzeitdaten handelt.

17. Verfahren nach einem der vorhergehenden Ansprüche 14 bis 16, wobei die ersten und zweiten Kommunikationsverbindungen eine Äquidistanzeigenschaft aufweisen.

18. Verfahren nach einem der vorhergehenden Ansprüche 14 bis 17, wobei es sich bei der ersten und der zweiten Kommunikationsverbindung jeweils um ein industrielles Ethernet, insbesondere ein isochrones Realtime Ethernet oder ein Realtime Fast Ethernet handelt.

19. Verfahren nach einem der vorhergehenden Ansprüche 14 bis 18, wobei mehrere Ein- und / oder Ausgangsports, denen jeweils eine Empfangs- und / oder Sendeliste zugeordnet ist, über ein Koppelfeld gekoppelt werden.

20. Verfahren nach einem der vorhergehenden Ansprüche 14 bis 19, bei dem die ersten und zweiten Übertragungszyklen keine Phasenverschiebung aufweisen.

21. Computerprogrammprodukt mit Mitteln zur Durchführung eines Verfahrens nach einem der vorhergehenden Ansprüche 14 bis 20, wenn das Computerprogramm auf einem elektronischen Schaltkreis und / oder einem Automatisierungssystem ausgeführt wird.

## Claims

1. Electronic circuit for a communication interface between a first communication connection (16) with a first transmission cycle (17) of a first length and a second communication connection (12) with a second transmission cycle (13) of a second length, **characterized in that** the first and the second transmission cycle are synchronous with one another and the first and second length are equal or are an integral multiple of one another, **in that** a receive list (5, 15, 19, 33) for the first transmission cycle and a transmit list (6, 14, 18, 31) for the second transmission cycle are provided, wherein a data message (20, 21, 22, 23, 24, 25, 26, 27, 28) received in accordance with the receive list is allocated to an element of the transmit list, and **in that** a buffer memory (8, 35) is provided for a data message received in accordance with the receive list and a data message to be transmitted according to the transmit list.

2. Electronic circuit according to Claim 1, comprising means (4, 7, 9, 30, 32, 34) for forwarding the data message from the buffer memory, particularly a cut-through buffer memory, to the second communication connection.

3. Electronic circuit according to Claim 1 or 2, with a first controller (4, 34) for the receive list and with a second controller (7, 30) for the transmit list, wherein the second controller is arranged for delivering a signal (9, 32) to the first controller when the second transmission cycle begins.

4. Electronic circuit according to Claim 1, 2 or 3, comprising means for checking a header information of the data message and with means for forwarding the data message to the second communication connection as soon as the header information has been verified.

5. Electronic circuit according to one of the preceding Claims 1 to 4, in which the first and/or the second communication connection are bidirectional and a transmit list and a receive list is in each case allocated to each of the bidirectional communication connections.

6. Electronic circuit according to one of the preceding Claims 1 to 5, in which the data message involves real-time data.

7. Electronic circuit according to one of the preceding Claims 1 to 6, wherein the first and second communication connections have an equidistance characteristic.

8. Electronic circuit according to one of the preceding Claims 1 to 7, wherein the first and second communication connections are an industrial Ethernet, particularly an isochronous real-time Ethernet or a real-time fast Ethernet (RTF).

9. Electronic circuit according to one of the preceding Claims 1 to 8, comprising a number of input and/or output ports to which in each case a receive and/or transmit list is allocated, and with a switching matrix (29) for coupling one of the ports to one or more of the other ports.

10. Automation system comprising a number of components (41, 42, 43, 44, 45) which are connected to one another by communication connections (46, 47, 48, 49), in which system each of the components has an electronic circuit according to one of the preceding Claims 1 to 9 as integral component or as supplementary device.

11. Automation system comprising at least one first part-network (50) with first communication connections and comprising at least one second part-network (51, 52, 53) with second communication connections and with at least one coupling node (54, 55, 56) between the first and second part-networks, comprising an electronic circuit according to one of the preceding Claims 1 to 9.

12. Automation system according to Claim 10 or 11, comprising a number of coupling nodes which are connected to one another by a third part-network (50).

13. Automation system according to Claim 10, 11 or 12, in which the different part-networks have different transmission cycles and/or transmission rates.

14. Method for producing a communication interface between a first communication connection with a first transmission cycle of a first length and a second communication connection with a second transmission cycle of a second length, wherein the first and the second transmission cycles are synchronous with one another and the first and the second length are equal and/or have an integral multiple of one another, comprising the following steps:
a. receiving a data message according to a receive list allocated to the first transmission cycle,
b. storing the data message in a buffer memory,
c. sending the data message according to a transmit list allocated to the second transmission cycle.

15. Method according to Claim 14, in which a controller of the transmit list delivers a signal to the controller of the receive list when the second transmission cycle begins.

16. Method according to one of the preceding Claims 14 or 15, in which the data message involves real-time data.

17. Method according to one of the preceding Claims 14 to 16, wherein the first and second communication connections submit an equidistance characteristic.

18. Method according to one of the preceding Claims 14 to 17, wherein the first and the second communication connection is in each case an industrial Ethernet, particularly an isochronous real-time Ethernet or a real-time fast Ethernet.

19. Method according to one of the preceding Claims 14 to 18, wherein a number of input and/or output ports, to which in each case a receive and/or transmit list is allocated, are coupled by a switching matrix.

20. Method according to one of the preceding Claims 14 to 19, in which the first and second transmission cycles do not exhibit a phase shift.

21. Computer program product comprising means for carrying out a method according to one of the preceding Claims 14 to 20 when the computer program is executed on an electronic circuit and/or an automation system.

## Revendications

1. Circuit électronique pour une interface de communication entre une première liaison ( 16 ) de communication, ayant un premier cycle ( 17 ) de transmission d'une première longueur, et une deuxième liaison ( 12 ) de communication, ayant un deuxième cycle ( 13 ) de transmission d'une deuxième longueur,
**caractérisé**
**en ce que** le premier et le deuxième cycles de transmission sont synchrones entre eux et la première et la deuxième longueurs sont identiques ou sont un multiple en nombre entier l'une de l'autre, en ce qu'il est prévu une liste ( 5, 15, 19, 33 ) de réception pour le premier cycle de transmission et une liste ( 6, 14, 18, 31 ) d'émission pour le deuxième cycle de transmission, un télégramme ( 20, 21, 22, 23, 24 25, 26, 27, 28 ) de données reçu suivant la liste de réception étant affecté à un élément de la liste d'émission et en ce qu'une mémoire ( 8, 35 ) tampon est prévue pour un télégramme de données reçu suivant la liste de réception et pour un télégramme de données à émettre suivant la liste d'émission.

2. Circuit électronique suivant la revendication 1, comprenant des moyens ( 4, 7, 9, 30, 32, 34 ) d'acheminement du télégramme de données de la mémoire tampon, notamment d'une mémoire tampon cut-through, à la deuxième liaison de communication.

3. Circuit électronique suivant la revendication 1 ou 2, comprenant un premier organe ( 4, 34 ) de commande de la liste de réception et un deuxième organe ( 7, 30 ) de commande de la liste d'émission, le deuxième organe de commande étant constitué pour envoyer un signal ( 9, 32 ) au premier organe de commande, lorsque le deuxième cycle de transmission commence.

4. Circuit électronique suivant la revendication 1, 2 ou 3, comprenant des moyens de contrôle d'une information d'en-tête du télégramme de données et des moyens d'acheminement du télégramme de données à la deuxième liaison de communication, dès que l'information d'en-tête a été vérifiée.

5. Circuit électronique suivant l'une des revendications précédentes 1 à 4, dans lequel la première et/ou la deuxième liaisons de communication sont bidirectionnelles, respectivement une liste d'émission et une liste de réception sont affectées à chacune des liaisons de communication bidirectionnelles.

6. Circuit électronique suivant l'une des revendications précédentes 1 à 5, dans lequel le télégramme de données consiste en des données en temps réel.

7. Circuit électronique suivant l'une des revendications précédentes 1 à 6, dans lequel les première et deuxième liaisons de communication ont une propriété d'équidistance.

8. Circuit électronique suivant l'une des revendications précédentes 1 à 7, dans lequel les première et deuxième liaisons de communication sont un éthernet industriel, notamment un éthernet Realtime isochrone ou un Realtime Fast Ethernet ( RTF ).

9. Circuit électronique suivant l'une des revendications précédentes 1 à 8, comprenant plusieurs accès d'entrée et/ou de sortie, auxquels est affectée respectivement une liste de réception et/ou une liste d'émission, et comprenant un champ ( 29 ) de couplage pour le couplage de l'un des accès à l'un ou à plusieurs des autres accès.

10. Système d'automatisation comprenant plusieurs composants ( 41, 42, 43, 44, 45 ), qui sont reliés entre eux par des liaisons ( 46, 47, 48, 49 ) de communication, dans lequel chacun des composants a un circuit électronique suivant l'une des revendications précédentes 1 à 9 comme partie intégrante ou comme appareil supplémentaire.

11. Système d'automatisation comprenant au moins un premier sous-réseau ( 50 ) ayant de premières liaisons de communication ayant au moins un deuxième sous-réseau ( 51, 52, 53 ) ayant des deuxièmes liaisons de communication et ayant au moins un noeud ( 54, 55, 56 ) de couplage entre les premier et deuxième sous-réseaux ayant un circuit électronique suivant l'une des revendications précédentes 1 à 9.

12. Système d'automatisation suivant la revendication 10 ou 11, ayant plusieurs noeuds de couplage, qui sont reliés entre eux par un troisième sous-réseau ( 50 ).

13. Système d'automatisation suivant la revendication 10, 11 ou 12, dans lequel les sous-réseaux différents ont des cycles de transmission et/ou des débits de transmission différents.

14. Procédé de production d'une interface de communication entre une première liaison de communication ayant un premier cycle de transmission d'une première longueur et une deuxième liaison de communication ayant un deuxième cycle de transmission d'une deuxième longueur, les premiers et les deuxièmes cycles de transmission étant synchrones entre eux et la première et la deuxième longueur étant identiques ou étant un multiple en nombre entier l'une de l'autre, comprenant les stades suivants :
a. réception d'un télégramme de données suivant une liste de réception affectée au premier cycle de transmission,
b. mémorisation du télégramme de données dans une mémoire tampon,
c. émission du télégramme de données suivant une liste d'émission affectée au deuxième cycle de transmission.

15. Procédé suivant la revendication 14, dans lequel un organe de commande de la liste d'émission envoie un signal à l'organe de commande de la liste de réception, lorsque le deuxième cycle de transmission commence.

16. Procédé suivant l'une des revendications précédentes 14 ou 15, dans lequel le télégramme de données consiste en des données en temps réel.

17. Procédé suivant l'une des revendications précédentes 14 à 16, dans lequel les première et deuxième liaisons de communication ont une propriété d'équidistance.

18. Procédé suivant l'une des revendications précédentes 14 à 17, dans lequel les première et deuxième liaisons de communication sont un éthernet industriel, notamment un éthernet Realtime isochrone ou un Realtime Fast Ethernet ( RTF ).

19. Procédé suivant l'une des revendications précédentes 14 à 18, dans lequel plusieurs accès d'entrée et/ou de sortie, auxquels est affectée respectivement une liste de réception et/ou d'émission, sont couplés par un champ de couplage.

20. Procédé suivant l'une des revendications précédentes 14 à 19, dans lequel les premier et deuxième cycles de transmission n'ont pas déphasage.

21. Produit de programme informatique comprenant des moyens pour la mise en oeuvre d'un procédé suivant l'une des revendications précédentes 14 à 20, lorsque le programme informatique est réalisé sur un circuit électronique et/ou sur un système d'automatisation.
